# NOUVEAU FASCICULE DE BREVET EUROPEEN

(11) **EP 0 233 110 B2**
(45) Date de publication et mention de la décision concernant l'opposition: **19.03.1997**
(45) Mention de la délivrance du brevet: 25.04.1990
(21) Numéro de dépôt: 87400154.8
(22) Date de dépôt: 23.01.1987
(51) Int. Cl.: C23G 1/02, C11D 7/08, C11D 7/44, C04B 41/53

(54) **Utilisation d'un sel pour influencer l'écoulement de compositions épaissies**
Verwendung eines Salzes zum Beeinflussen des Fliessverhaltens verdickter Zusammensetzungen
Use of a salt to influence the flow characteristics of thickened compositions

(30) Priorité: 31.01.1986 FR 8601338
(43) Date de publication de la demande: 19.08.1987
(73) Titulaire: RHONE-POULENC CHIMIE, 92408 Courbevoie Cédex (FR)
(72) Inventeur: Schuppiser, Jean-Luc, F-77410 Claye-Souilly (FR); Besnard, Marie-Madeleine, F-92160 Antony (FR)
(74) Mandataire: Seugnet, Jean Louis

(56) Documents cités:
- DE-A- 2 413 870
- DE-A- 3 235 159
- FR-A- 2 299 366
- US-A- 3 211 659
- US-A- 3 510 432
- US-A- 3 578 499
- US-A- 3 899 437
- US-A- 4 302 253
- Prospectus BASF "Sokalan DCS", April 1981

## Description

La présente invention concerne l'utilisation d'un sel d'acide organique ou minéral ayant une constante de dissociation pK à 25°C égale ou supérieure à 2 et d'une base forte, pour augmenter la valeur de seuil d'écoulement de compositions aqueuses acides épaissies par un polysaccharide.

L'invention a pour objet plus particulier l'utilisation d'un sel d'acide organique ou minéral ayant une constante de dissociation pK à 25°C égale ou supérieure à 2 et d'une base forte, pour augmenter la valeur de seuil d'écoulement de compositions aqueuses acides pour le nettoyage de surface.

II est de pratique courante d'utiliser des compositions aqueuses acides pour retirer les dépôts minéraux et organiques adhérents aux surfaces. Ces dépôts minéraux sont généralement constitués de composés tels que carbonates, sulfates, oxydes de métaux tels calcium, magnésium, potassium et fer. Des compositions à base d'acide chlorhydrique ou d'acide formique sont usuelles pour le detartrage des surfaces en porcelaine et des compositions contenant de l'acide phosphorique sont bien connues pour ôter la rouille des surfaces métalliques. De manière avantageuse, les compositions de nettoyage liquides sont épaissies à l'aide d'un agent viscosifiant pour que le produit puisse être appliqué sur des surfaces inclinées ou de forme irregulière sans écoulement excessif de manière a permettre un temps de contact suffisant entre l'acide et la surface à nettoyer.

L'emploi d'un épaississant ayant un comportement newtonien en solution aqueuse est peu satisfaisant car la solution a toujours tendance à l'écoulement même si l'épaississant est incorporé en quantités relativement importantes. Des compositions de nettoyage de caractère non-newtonien comprenant un épaississant tel que la gomme Xanthane ont déjà été suggérées dans l'art antérieur: voir par exemple le brevet US-A-3 578 499 et la demande de brevet européen EP-A-0091 194. Bien que la gomme xanthane soit considérée être raisonnablement stable à bas pH, elle s'hydolyse néanmoins en présence d'acide résultant en une diminution de la viscosité et du seuil d'écoulement. Ces compositions ne peuvent donc être conservees pendant de longues périodes de temps sans perte de leurs propriétés rhéologiques.

Il a aussi été proposé d'après le brevet US-A-4 302 253 des compositions de nettoyage comprenant une solution d'acide minéral épaissie avec une argile, de la gomme Xanthane et une imidazoline. L'imidazoline fonctionne comme agent antifloculant de l'argile. Ces compositions seraient stables pendant plusieurs mois mais elles présentent l'inconvénient d'un prix de revient assez élevé.

Dans la pratique, un besoin est toujours ressenti pour des compositions aqueuses acides de faible prix de revient, ayant à la fois la viscosite désirée, un seuil d'écoulement éléve et la nécessaire stabilité au stockage.

L'invention concerne l'utilisation d'un sel d'acide organique ou minéral ayant une constante de dissociation pK à 25°C égale ou supérieure à 2 et d'une base forte choisi dans le groupe formé par le formiate de sodium, le formiate de potassium, les phosphates monosodique, disodique ou trisodique, les phosphates monopotassique, dipotassique, tripotassique, le borate de sodium, le monohydrogénocitrate de sodium ou de potassium, le dihydrogénocitrate de sodium ou de potassium, le tartrate de sodium ou de potassium, le tartrate acide de sodium ou de potassium, le carbonate de sodium, l'hydrogénocarbonate de sodium, le phtalate de sodium ou de potassium, le phtalate acide de sodium ou de potassium, pour augmenter la valeur de seuil d'écoulement de compositions aqueuses acides épaissies contenant un acide organique ayant une constante de dissociation pK à 25°C égale ou supérieure à 2 et un polysaccharide.

Les polysaccharide qui agit comme épaississant peut étre choisi parmi les gommes naturelles, les gommes naturelles modifiées, les gommes biosynthétiques. Le terme englobe tous polysaccharides et leurs dérivés qui par dispersion dans l'eau gonflent pour produire des gels ou solutions hautement visqueuses. Des exemples de gommes naturelles et de gommes naturelles modifiées incluent la gomme guar, la gomme de caroube, les carraghénates, les alginates comme l'alginate de sodium et l'alginate de propylèneglycol, les dérivés cellulosiques comme les carboxyméthylcelluloses, hydroxyalkylcelluloses hexaméthylpropylcelluloses. Les gommes biosynthétiques ou biogommes sont des polysaccharides de poids moléculaire éléve obtenus par fermentation d'un hydrate de carbone sous l'action d'un microorganisme approprié. Ces microorganismes peuvent être des bactéries telles que décrites dans Bergey's Manual Of Determinative Bacteriology (8e edition 1974 - Williams N. Wilkins C^{c} Baltimore) par exemple les bactéries appartenant au genre *Xanthomonas* et plus spécifiquement les espèces *Xanthomonas begoniae, Xanthomonas campestris, Xanthomonas carotae, Xanthomonas hedera, Xanthomonas incanae, Xanthomonas malvacearum, Xanthomonas papaveri cola, Xanthomonas phaseoli, Xanthomonas pisi, Xanthomonas vasculorum, Xanthomonas vericatoria, Xanthomonas vitians, Xanthomonas pelargonii;* les bactéries du genre *Arthrobacter* et plus particulièrement les espèces *Arthrobacter stabilis, Arthrobacter viscosus;* du genre *Erwinia:* du genre *Azotobacter* et plus particulièrement l'espèce *Azotobacter indicus;* du genre *Agrobacterium,* plus particulièrement les espèces *Agrobacterium radiobacter, Agrobacterium rhizogenes, Agrobacterium tumefaciens;* ou des champignons appartenant au genre *Sclerotium* et plus particulièrement les espèces *Sclerotium glucanicum, Sclerotium Rolfsii* etc.

Toutes les gommes précitées présentent en solution aqueuse un comportement pseudoplastique.

De manière préférentielle, on choisit l'hétéropolysaccharide dénommé gomme Xanthane obtenu par fermentation d'un hydrate de carbone à l'aide d'une culture de *X. campestris.* L gomme Xanthane est disponible commercialement. Sa préparation est décrite dans de nombreuses publications. On peut se référer par exemple aux brevets US 3 020 206, US 3 020 207, US 3 391 060. US 4 154 654. La dénomination gomme xanthane inclut les produits traités et modifiés comme la gomme xanthane desacétylée, la gomme xanthane dépyruvatisée, la gomme xanthane réticulée par des cations polyvalents, les complexes gomme-glyoxal, etc . . . Dans les compositions selon l'invention, on peut utiliser une gomme ou un mélange de gommes. Il est connu que, à l'intérieur de certaines proportions, des mélanges de gommes présentent une synergie au regard du pouvoir viscosifiant et/ou gélifiant. Cette synergie peut être utilisée avec profit dans les compositions de l'invention.

Le composant acide de la composition peut être tout monoacide ou polyacide carboxylique, saturé ou insaturé, soluble dans l'eau ayant une constante de dissociation pK mesurée à 25°C égale ou supérieure à 2.

Des exemples représentatifs d'acides incluent des acides monocarboxyliques comme l'acide formique, l'acide acétique, l'acide chloracétique, l'acide lactique, l'acide ascorbique; des acides dicarboxyliques comme l'acide fumarique, l'acide malonique, l'acide succinique, l'acide glutarique, l'acide itaconique, l'acide tartrique; des acides tricarboxyliques comme l'acide citrique, utilisés seuls ou en mélange entre eux. Dans les compositions pour nettoyage de surfaces, on préfère plus particulièrement les acides formique, acétique et citrique. De manière préférentielle, la constante pK ne sera pas supérieure à environ 6-7.

Les proportions relatives d'acide, de sel d'acide et de polysaccharide peuvent varier dans une large mesure en fonction de facteurs tels que la nature propre de chacun des additifs, la viscosité désirée et l'application spécifique envisagée. On peut donner, sans toutefois limiter l'invention, une composition typique ayant un pH d'environ 1,5 à environ 6, comprenant en poids entre 2 et 40% d'acide, entre 0,1 et 30% de sel d'acide, entre environ 0.001 et environ 20% de polysaccharide et entre 10 et 97% d'eau.

Dans des compositions de nettoyage, l'acide est généralement inclu en quantité comprise entre 0,5 mole et 10 moles par litre de composition de manière à obtenir une action de nettoyage efficace. La quantité de sel est fonction de la valeur du pK et de la quantité de l'acide libre présent dans la composition. La quantité nécessaire sera déterminée de manière à maintenir le pH de la solution à une valeur comprise entre environ 1,5 et 6 et de préférence entre 2 et 4. Le pH optimal dépendra de la nature du dépôt à retirer et de la nature de la surface à nettoyer.

La quantité de polysaccharide à inclure dans la composition peut également varier largement en fonction du pouvoir épaississant de la gomme choisie et de la consistance désirée de la composition qui peut aller d'un liquide à un gel. Il est important pour le nettoyage des surfaces que la viscosité et/ou le seuil d'écoulement soient tels que la composition puisse être appliquée à l'épaisseur désirée et maintenue sur les surfaces inclinées sans que l'écoulement ne se produise. Des compositions utiles pour le détartrage d'articles sanitaires sont généralement conditionnées en flacon "gicleur". Des quantités de polysaccharide comprises entre 0,001 et 10%, de préférence 0,01 à 5%, seront suffisantes pour permettre un écoulement facile par la buse tout en ayant une viscosité suffisante pour rester en contact avec la surface à nettoyer. Des compositions sous forme de gel épais ou pâteux plus spécialement adaptées à un décapage par étalement au moyen d'un couteau, d'un pinceau ou d'une brosse ou sous forme de gel solide diluable à l'eau, pourront contenir le polysaccharide en proportion plus importante, par exemple entre 0,1 et 20% en poids par rapport au poids de la composition.

Les compositions peuvent être préparées de toute manière souhaitable par mélange des additifs dans l'eau. Il est préférable de disperser et dissoudre initialement le polysaccharide dans l'eau puis d'ajouter l'acide et enfin le sel.

L'addition du sel d'acide a pour effet d'augmenter la valeur de seuil d'écoulement de la composition. De plus, elle permet de minimiser l'hydrolyse du polysaccharide qui se traduit par une chute de la viscosité et du seuil d'écoulement. Les compositions peuvent donc être stockées tout en conservant à long terme des propriétés rhéologiques satisfaisantes. Elles sont particulièrement utiles pour le détartrage des surface en porcelaine et le décapage des surfaces métalliques.

Les compositions peuvent éventuellement contenir divers autres ingrédients utilisés dans les formulations acides tels que des agents tensioactifs, des colorants, des détergents, des parfums, des bactéricides, des abrasifs et autres.

Les exemples suivants sont donnés à titre illustratif et non limitatif de l'invention. Dans tous les exemples, les parties sont exprimées en poids.

### Exemple 1

20 parties en poids d'acide formique de pureté 100% sont ajoutées à 80 parties en poids d'une solution aqueuse contenant 3,75 g/litre de gomme xanthane (Marque RHODOPOL 23 de la Société Rhône-Poulenc Spécialités Chimiques). Cette composition sert de témoin A.

Dans 95 parties de la composition témoin, on dissout 5 parties de phosphate trisodique 12 H₂O. Le pH est égal à 2.

Des fractions aliquotes de chaque composition sont stockées pendant 30 jours à 25°C et 40°C.

Sur chaque échantillon, on mesure la viscosité, la contrainte critique d'écoulement et le pouvoir détartrant.

La viscosité et la contrainte critique d'écoulement sont mesurées à l'aide d'un viscosimètre rotatif RHEOMAT 30® à la température de 25°C.

La viscosité n est donnée à 100 sec⁻¹.

Contrainte critique d'écoulement σ_{c}: on mesure les viscosités dans une large gamme de gradients de vitesse (0,01 à 700 sec) parcourue en un cycle de vitesses croissantes et décroissantes durant 2 minutes. La contrainte critique d'écoulement est définie comme la valeur de la contrainte résiduelle obtenue immédiatement après arrêt de cisaillement.

Le pouvoir detartrant est évalué selon le test suivant: une plaquette de 4 g d'un matériau à 100% de carbonate de calcium, de dimensions 20 × 20 × 5, est immergée dans la composition dont la quantité est calculée de manière à ce que la réaction entre le Ca Co₃ et l'acide soit équimolaire. Apres 15 minutes de contact, on ajoute 30 g d'eau distillée et on laisse reposer deux heures. On mesure la perte relative de poids du matériau (Δp%). Le test est effectué sur les compositions après 30 jours de stockage à 25°C et 40°C.

Le résultats sont donnés ci-après:

| | Age (j.) | stockage 25°C | | | stockage 40°C | | |
|---|---|---|---|---|---|---|---|
| | | σ_{c} (mPa) | η (mPa.s) | Δ p% | σ_{c} (mPa) | η (mPa.s) | Δp% |
| A | 0 | 285 | 46 | | 285 | 46 | |
| | 30 | 70 | 40 | 66 | 50 | 36 | 61 |
| Ex.1 | 0 | 380 | 46 | | 380 | 46 | |
| | 30 | 200 | 46 | 57 | 150 | 43 | 49 |

On constate que la composition selon l'invention a un seuil d'écoulement plus élève que la composition témoin pour une même valeur de viscosité et que sa stabilité au stockage mesurée par l'évolution des valeurs de la contrainte critique d'écoulement et de la viscosité est améliorée.

### Exemple 2

De la manière décrite à l'exemple 1, on prépare une solution acide contenant 0,3% de gomme xanthane et 9,5% d'acide formique (Témoin B).

A 98,1 parties de la solution B, on ajoute 1,9 parties de phospahte trisodique 12 H₂O de manière à obtenir un pH égal à 2.

On obtient les résultats suivants:

| | Age (j) | stockage 25°C | | | stockage 40°C | | |
|---|---|---|---|---|---|---|---|
| | | σ_{c} (mPa) | η (mPa.s) | Δ p% | σ_{c} (mPa) | η (mPa.s) | Δp% |
| B | 0 | 290 | 46 | | 290 | 46 | |
| | 30 | 80 | 41 | 51 | 50 | 38 | 51 |
| Ex. 2 | 0 | 360 | 46 | | 360 | 46 | |
| | 30 | 220 | 46 | 41 | 175 | 44 | 38 |

La comparaison des valeurs de la composition de l'invention selon l'exemple 1 et de la composition témoin B montre que, pour un pouvoir détartrant sensiblement égal, les compositions de l'invention présentent une contrainte d'écoulement initiale de +31% et de + 150% après 30 jours de stockage.

### Exemple 3

On renouvelle l'exemple 2 en augmentant la concentration de gomme xanthane. Dans cet exemple, la solution aqueuse témoin C contient 0,45% de gomme xanthane et 9,5% d'acide formique.

A 98,1 parties de la solution C, on ajoute 1,9 parties de phosphate trisodique 12 H₂O. Le pH est égal à 2.

| | Age (j.) | stockage 25°C | | | stockage 40°C | |
|---|---|---|---|---|---|---|
| | | σ_{c} (mPa) | η (mPa.s) | Δ p% | σ_{c} (mPa) | η (mPa.s) |
| C | 0 | 930 | 81 | | 930 | 81 |
| | 30 | 360 | 67 | 45 | 285 | 65 |
| Ex. 3 | 0 | 1 215 | 82 | | 1 215 | 82 |
| | 30 | 600 | 71 | 34 | 430 | 72 |

### Exemples 4 à 6

On prépare les solutions suivantes:
- D:: gomme xanthane: 0,3 p
acide acétique 100%: 30,0 p
eau: 69,7 p
- E:: gomme xanthane: 0,3 p
acide citrique 100%: 30,0 p
eau: 69,7 p
- F:: gomme xanthane: 0,3 p
acide phosphorique 100%: 8,7 p
eau: 91,0 p

A 100 parties des solutions D, E et F, on ajoute du phosphate trisodique 10 H₂O en quantités suivantes:
D: 0,7 p (Exemple 4) pH: 2,3
E: 11,1 p (Exemple 5) pH: 2
F: 11,85 p (Exemple 6) pH: 2

Les résultats figurent dans le tableau suivant:

| | Age (j.) | stockage 25°C | | | stockage 40°C | |
|---|---|---|---|---|---|---|
| | | σ_{c} (mPa) | η (mPa.s) | Δ p% | σ_{c} (mPa) | η (mPa.s) |
| D | 0 | 240 | 43 | | 240 | 43 |
| | 30 | 192 | 41 | 28 | 100 | 32 |
| Ex. 4 | 0 | 285 | 43 | | 285 | 43 |
| | 30 | 285 | 43 | 26 | 200 | 38 |
| E | 0 | 480 | 68 | | 480 | 68 |
| | 30 | 125 | 50 | 29 | 55 | 46,5 |
| Ex. 5 | 0 | 860 | 67 | | 860 | 67 |
| | 30 | 600 | 62 | 27 | 310 | 56 |
| F | 0 | 260 | 45 | | 260 | 45 |
| | 30 | 25 | 34 | 15,5 | 20 | 31,5 |
| Ex. 6 | 0 | 430 | 47 | | 430 | 47 |
| | 30 | 200 | 42,5 | 12 | 50 | 38,5 |

Les performances obtenues par la composition de l'exemple 6 sont inférieures à celles des autres compositions, aussi bien au regard du pouvoir de nettoyage que de la stabilité au stockage en particulier à 40°C.

### Exemples 7 à 9

Dans ces exemples, on fait varier la nature et la quantité du sel ajouté.

La solution aqueuse temoin G contient 0,3% de gomme xanthane et 9,5% d'acide formique.

| | Sel ajouté | pH | Age (j.) | stockage 25°C | | | stockage 40°C | |
|---|---|---|---|---|---|---|---|---|
| | | | | σ_{c} (mPa) | η (mPa.s) | Δ p% | σ_{c} (mPa) | η (mPa.s) |
| G | | | 0 | 290 | 43 | | 290 | 43 |
| | | | 30 | 80 | 39 | 51 | 50 | 38 |
| 7 | H COONa | 2 | 0 | 344 | 44 | | 344 | 44 |
| | 0,65 p. | | 30 | 228 | 44 | 37 | 143 | 44 |
| 8 | H COONa | 2,3 | 0 | 390 | 44 | | 390 | 44 |
| | 1,44 p. | | 30 | 285 | 44 | 34 | 160 | 44 |
| 9 | H COONa | 3,52 | 0 | 400 | 44 | | 400 | 44 |
| | 19 p. | | 30 | 330 | 44 | 29 | 250 | 44 |

pour 100 p. de solution G

### Exemples 10 et 11

On utilise d'autres polysaccharides.

*Témoin H:* solution aqueuse contenant 0,48% de gomme guar et 20% d'acide formique.

A 100 parties de cette solution, on ajoute 5,26 parties de phosphate trisodique, (exemple 10).

Le pH est égal à 2.

*Témoin I:* solution aqueuse contenant 0,48% de carboxyméthylcellulose et 20% d'acide formique.

A 100 parties de cette solution, on ajoute 25 parties de phosphate trisodique, (exemple 11). Le pH est égal à 4.

| | Age (j.) | Stockage 25°C | | | Stockage 40°C | |
|---|---|---|---|---|---|---|
| | | σ_{c} (mPa) | η (mPa.s) | Δ p% | σ_{c} (mPa) | η (mPa.s) |
| H | 0 | 710 | 180 | | | |
| | 30 | 10 | 90 | 75 | | |
| Ex. 10 | 0 | 830 | 240 | | | |
| | 30 | 200 | 200 | 49 | | |
| I | 0 | 100 | 90 | | 100 | 90 |
| | 30 | 0 | 87 | 48 | 0 | 0 |
| Ex.11 | 0 | 150 | 90 | | 150 | 90 |
| | 30 | 80 | 90 | 32 | 50 | 60 |

## Revendications

1. Utilisation d'un sel d'acide organique ou minéral ayant une constante de dissociation pK à 25°C égale ou supérieure à 2 et d'une base forte choisi dans le groupe formé par le formiate de sodium, le formiate de potassium, les phosphates monosodique, disodique ou trisodique, les phosphates monopotassique, dipotassique, tripotassique, le borate de sodium, le monohydrogénocitrate de sodium ou de potassium, le dihydrogénocitrate de sodium ou de potassium, le tartrate de sodium ou de potassium, le tartrate acide de sodium ou de potassium, le carbonate de sodium, l'hydrogénocarbonate de sodium, le phtalate de sodium ou de potassium, le phtalate acide de sodium ou de potassium, pour augmenter la valeur de seuil d'écoulement de compositions aqueuses acides épaissies contenant un acide organique ayant une constante de dissociation pK à 25°C égale ou supérieure à 2 et un polysaccharide.

2. Utilisation selon la revendication 1), caractérisée en ce que le polysaccharide est choisi dans le groupe formé par les gommes naturelles, les gommes naturelles modifiées, les gommes biosynthétiques et leurs mélanges.

3. Utilisation selon la revendication 1), caractérisée en ce que le polysaccharide est un hétéropolysaccharide issu de *Xanthomonas.*

4. Utilisation selon la revendication 1), caractérisée en ce que le polysaccharide est la gomme Xanthane.

5. Utilisation selon l'une quelconque des revendications précédentes, caractérisée en ce que l'acide est choisi dans le groupe formé par l'acide formique, l'acide acétique, l'acide citrique.

6. Utilisation selon l'une quelconque des revendications précédentes, caractérisée en ce que le sel d'acide organique ou minéral ayant une constante de dissociation pK à 25°C égale ou supérieure à 2 et d'une base forte est le formiate de sodium ou le phosphate trisodique.

7. Utilisation selon l'une quelconque des revendications précédentes, caractérisée en ce que le pH de la composition aqueuse acide épaissie finale est compris entre 1,5 et 6.

8. Utilisation selon la revendication précédente, caractérisée en ce que le pH de la composition aqueuse acide épaissie finale est compris entre 2 et 4.

9. Utilisation selon l'une quelconque des revendications précédentes, caractérisée en ce que la quantité de polysaccharide est comprise entre 0,001 et 20% en poids par rapport au poids total de la composition aqueuse épaissie.

10. Utilisation selon l'une quelconque des revendications précédentes, caractérisée en ce que la composition aqueuse acide épaissie finale contient entre 2 et 40% en poids d'acide organique, entre 0,1 et 30% en poids de sel d'acide minéral ou organique, entre 0,001 et 20% en poids de polysaccharide, et entre 10 et 97% en poids d'eau.

11. Utilisation d'un sel d'acide organique ou minéral ayant une constante de dissociation pK à 25°C égale ou supérieure à 2 et d'une base forte choisi dans le groupe formé par le formiate de sodium, le formiate de potassium, les phosphates monosodique, disodique ou trisodique, les phosphates monopotassique, dipotassique, tripotassique, le borate de sodium, le monohydrogénocitrate de sodium ou de potassium, le dihydrogénocitrate de sodium ou de potassium, le tartrate de sodium ou de potassium, le tartrate acide de sodium ou de potassium, le carbonate de sodium, l'hydrogénocarbonate de sodium, le phtalate de sodium ou de potassium, le phtalate acide de sodium ou de potassium, selon l'une quelconque des revendications précédentes, pour augmenter la valeur de seuil d'écoulement de compositions aqueuses acides épaissies destinées au nettoyage de surfaces, au détartrage des surfaces en porcelaine et au décapage des surfaces métalliques.

12. Utilisation selon la revendication précédente, caractérisée en ce que le sel d'acide organique ou minéral ayant une constante de dissociation pK à 25°C égale ou supérieure à 2 et d'une base forte est le formiate de sodium ou le phosphate trisodique.

## Patentansprüche

1. Verwendung eines Salzes einer organischen Säure oder einer Mineralsäure mit einer Dissoziationskonstante pK gleich oder größer als 2 bei 25°C und einer starken Base, ausgewählt aus der Gruppe, gebildet aus Natriumformiat, Kaliumformiat, Mononatrium-, Dinatriumoder Trinatriumphosphat, Monokalium-, Dikalium-, Trikaliumphosphat, Natriumborat, Natriummonohydrogencitrat oder Kaliummonohydrogencitrat, Natriumdihydrogencitrat oder Kaliumdihydrogencitrat, Natriumtartrat oder Kaliumtartrat, saurem Natriumtartrat oder saurem Kaliumtartrat, Natriumcarbonat, Natriumhydrogencarbonat, Natriumphthalat oder Kaliumphthalat, saurem Natriumphthalat oder saurem Kaliumphthalat, zum Erhöhen des Werts des Fließpunkts von wäßrigen, sauren, verdickten Zusammensetzungen, die eine organische Säure mit einer Dissoziationskonstante pK gleich oder größer als 2 bei 25°C und ein Polysaccharid enthalten.

2. Verwendung nach Anspruch 1,
dadurch gekennzeichnet, daß das Polysaccharid aus der Gruppe ausgewählt wird, die aus den natürlichen Kautschuken, den modifizierten natürlichen Kautschuken, den biosynthetisch hergestellten Kautschuken und deren Mischungen gebildet wird.

3. Verwendung nach Anspruch 1,
dadurch gekennzeichnet, daß das Polysaccharid ein von *Xanthomonas* abgeleitetes Heteropolysaccharid ist.

4. Verwendung nach Anspruch 1,
dadurch gekennzeichnet, daß das Polysaccharid Xanthangummi ist.

5. Verwendung nach einem der vorangegangenen Ansprüche,
dadurch gekennzeichnet, daß die Säure aus der Gruppe, gebildet aus Ameisensäure, Essigsäure, Citronensäure, ausgewählt wird.

6. Verwendung nach einem der vorangegangenen Ansprüche,
dadurch gekennzeichnet, daß das Salz einer organischen Säure oder einer Mineralsäure mit einer Dissoziationskonstante pK gleich oder größer als 2 bei 25°C und einer starken Base Natriumformiat oder Trinatriumphosphat ist.

7. Verwendung nach einem der vorangegangenen Ansprüche,
dadurch gekennzeichnet, daß der pH-Wert der endgültigen, wäßrigen, sauren, verdickten Zusammensetzung zwischen 1,5 und 6 liegt.

8. Verwendung nach dem vorangegangenen Anspruch,
dadurch gekennzeichnet, daß der pH-Wert der endgültigen, wäßrigen, sauren, verdickten Zusammensetzung zwischen 2 und 4 liegt.

9. Verwendung nach einem der vorangegangenen Ansprüche,
dadurch gekennzeichnet, daß die Menge an Polysaccharid 0,001 bis 20 Gew.-% bezogen auf das Gesamtgewicht der wäßrigen, verdickten Zusammensetzung beträgt.

10. Verwendung nach einem der vorangegangenen Ansprüche,
dadurch gekennzeichnet, daß die endgültige, wäßrige, saure, verdickte Zusammensetzung 2 bis 40 Gew.-% organische Säure, 0,1 bis 30 Gew.-% eines Salzes einer Mineralsäure oder einer organischen Säure, 0,001 bis 20 Gew.-% Polysaccharid und 10 bis 97 Gew.-% Wasser enthält.

11. Verwendung eines Salzes einer organischen Säure oder einer Mineralsäure mit einer Dissoziationskonstante pK gleich oder größer als 2 bei 25°C und einer starken Base, ausgewählt aus der Gruppe, gebildet aus Natriumformiat, Kaliumformiat, Mononatrium-, Dinatrium- oder Trinatriumphosphat, Monokalium-, Dikalium-, Trikaliumphosphat, Natriumborat, Natriummonohydrogencitrat oder Kaliummonohydrogencitrat, Natriumdihydrogencitrat oder Kaliumdihydrogencitrat, Natriumtartrat oder Kaliumtartrat, saurem Natriumtartrat oder saurem Kaliumtartrat, Natriumcarbonat, Natriumhydrogencarbonat, Natriumphthalat oder Kaliumphthalat, saurem Natriumphthalat oder saurem Kaliumphthalat, nach einem der vorangegangenen Ansprüche zum Erhöhen des Werts des Fließpunkts von wäßrigen, sauren, verdickten Zusammensetzungen, die zum Reinigen von Oberflächen, zum Entkalken von Porzellanoberflächen und zum Abbeizen von metallischen Oberflächen bestimmt sind.

12. Verwendung nach dem vorangegangenen Anspruch,
dadurch gekennzeichnet, daß das Salz einer organischen Säure oder einer Mineralsäure mit einer Dissoziationskonstante pK gleich oder größer als 2 bei 25°C und einer starken Base Natriumformiat oder Trinatriumphosphat ist.

## Claims

1. Use of a salt of an organic or inorganic acid having a dissociation constant pK at 25°C equal to or greater than 2 and a strong base, chosen from the group composed of sodium formate, potassium formate, monosodium, disodium or trisodium phosphate, monopotassium, dipotassium or tripotassium phosphate, sodium borate, sodium or potassium monohydrogen citrate, sodium or potassium dihydrogen citrate, sodium or potassium tartrate, sodium or potassium acid tartrate, sodium carbonate, sodium hydrogen carbonate, sodium or potassium phthalate and sodium or potassium acid phthalate, to increase the flow threshold value of thickened acidic aqueous compositions containing an organic acid having a dissociation constant pK at 25°C equal to or greater than 2 and a polysaccharide.

2. Use according to claim 1, characterized in that the polysaccharide is chosen from the group composed of natural gums, modified natural gums, biosynthetic gums and mixtures thereof.

3. Use according to claim 1, characterized in that the polysaccharide is a heteropolysaccharide originating from *Xanthomonas*.

4. Use according to claim 1, characterized in that the polysaccharide is xanthan gum.

5. Use according to any one of the preceding claims, characterized in that the acid is chosen from the group composed of formic acid, acetic acid and citric acid.

6. Use according to any one of the preceding claims, characterized in that the salt of an organic or inorganic acid having a dissociation constant pK at 25°C equal to or greater than 2 and a strong base is sodium formate or trisodium phosphate.

7. Use according to any one of the preceding claims, characterized in that the pH of the final thickened acidic aqueous composition is between 1.5 and 6.

8. Use according to the preceding claim, characterized in that the pH of the final thickened acidic aqueous composition is between 2 and 4.

9. Use according to any one of the preceding claims, characterized in that the amount of polysaccharide is between 0.001 and 20 % by weight relative to the total weight of the thickened aqueous composition.

10. Use according to any one of the preceding claims, characterized in that the final thickened acidic aqueous composition contains between 2 and 40 % by weight of organic acid, between 0.1 and 30 % by weight of salt of an inorganic or organic acid, between 0.001 and 20 % by weight of polysaccharide and between 10 and 97 % by weight of water.

11. Use of a salt of an organic or inorganic acid having a dissociation constant pK at 25°C equal to or greater than 2 and a strong base, chosen from the group composed of sodium formate, potassium formate, monosodium, disodium or trisodium phosphate, monopotassium, dipotassium or tripotassium phosphate, sodium borate, sodium or potassium monohydrogen citrate, sodium or potassium dihydrogen citrate, sodium or potassium tartrate, sodium or potassium acid tartrate, sodium carbonate, sodium hydrogen carbonate, sodium or potassium phthalate and sodium or potassium acid phthalate, according to any one of the preceding claims, to increase the flow threshold value of thickened acidic aqueous compositions intended for the cleaning of surfaces, the removal of scale from porcelain surfaces and the scouring of metal surfaces.

12. Use according to the preceding claim, characterized in that the salt of an organic or inorganic acid having a dissociation constant pK at 25°C equal to or greater than 2 and a strong base is sodium formate or trisodium phosphate.
